# EUROPEAN PATENT SPECIFICATION

(11) **EP 2 505 934 B1**
(45) Date of publication and mention of the grant of the patent: **30.04.2014**
(21) Application number: 12161517.3
(22) Date of filing: 27.03.2012
(51) Int. Cl.: F24J 2/46

(54) **An apparatus for cleaning solar panels**
Vorrichtung zum Reinigen von Solarzellen
Appareil pour le nettoyage de panneaux solaires

(30) Priority: 28.03.2011 IT BO20110157
(43) Date of publication of application: 03.10.2012
(73) Proprietor: Hymach S.r.l., 45039 Stienta (Rovigo) (IT)
(72) Inventor: Ricci, Giancinto, 45039 Stienta (Rovigo) (IT)
(74) Representative: Dall'Olio, Christian

(56) References cited:
- EP-A1- 2 295 158
- WO-A1-2010/072877
- WO-A1-2010/079242
- WO-A1-2010/142837
- ES-A6- 2 013 032
- FR-A1- 2 703 376
- US-A- 5 769 954

## Description

The present invention relates to cleaning solar panels.

Solar panels are very widely present, for example arranged on support structures in fields or on coverings for protecting cars in car parks from the sun, etc.

Both solar panels of the thermal sort and those inherent to the photovoltaic technology are composed of a plurality of modules having a substantially flat form, each having an active surface for receiving the solar radiation in order to transform it into heat or electrical energy.

The active surface typically comprises an external layer, often made of a transparent material (for example glass) which protects and/or thermally insulates the operative components of the panel.

As the panels are in the open, they are subject to atmospheric agents, pollution, covering by leaves or dead insects, etc.

For this reason the above-mentioned layer (which in the following we shall assume to be glass for reasons of simplicity in the illustration) over time gets soiled, which alters its transmitting characteristics, with a deterioration in the efficiency of the panel.

It follows that the layer of glass of the modules constituting a given panel needs to be periodically cleaned.

At present this cleaning is manually performed, by specialised personnel provided with water, detergents and common tools used for cleaning domestic surfaces or glass, such as mops, cloths, brushes, buckets or other means for conveying or throwing water, etc.

Not only is this manual operation laborious and expensive, both in terms of time and money, but it is affected by the drawbacks now explained in the following.

It is known that in order to seek the best possible performance, the solar panel modules are inclined by a given angle with respect to the ground they are resting on, and are orientated in a predetermined direction, which angle and direction are chosen according to the daily motion of the sun which varies according to geographic (i.e. latitude and longitude).

As the panels are each formed by various coplanar modules, the personnel with the task of cleaning has to operate on an inclined surface that often develops by a certain degree in height.

Even using ladders or other like equipment, it is an awkward job to clean inclined surfaces placed at a certain height, and in detail this is especially true when the surfaces are those of the most internal modules and/or the modules that are the highest of the panel; In fact, the personnel working on the cleaning will have to work with their feet on the ladder which will clearly have to be situated laterally or frontally to the panel.

Even if the mop used has a very long handle, this does not guarantee excellent cleaning of the internal and/or high modules because the mop become very heavy too and the wiping action on the panel is less vigorous.

If special detergent products are intended to be used with spray dispensers, the operative will have to try to bring the dispenser very close to the surface of each module, which is not easy both because it is preferable not to rest on the glass during cleaning, so as not to risk damage, and because cleaning while leaning well away from a ladder is dangerous.

Therefore at present solar panels are actually not cleaned at all or are cleaned badly, in the sense that efficient cleaning of all the modules of the panel is not always possible, and the cleaning operation is slow and laborious.

Document WO 2010/079242 discloses a method for cleaning solar panels and a vehicle for carrying out said method; the method includes spraying steam in the form of multiple jets with a pressure and a temperature depending on the characteristics of the solar panel to be cleaned and of the impurities to be removed and at an angle that can be adjusted relative to the panel. The method can be combined with gentle cleaning using elements contacting the surface of the panels to be cleaned. The device includes a self-propelled vehicle, a water tank feeding a system for treating and purifying the water prior to feeding a steam generator, with a means for regulating the output temperature and pressure of the steam, which enters a system for distribution to the steam diffusers, which are coupled on a support associated with a cantilevered structure of the self-propelled vehicle.

Document EP 2.295.158, which includes the features of the preamble of claim 1, discloses a cleaning device for thermosolar power plants. This device has cleaning heads provided at free ends of longer and shorter extension arms and comprising a curved contour observed in an advancement direction. The longer extension arm is arranged in front of the shorter extension arm in the advancement direction. The extension arms have arm parts connected with each other in a joint manner, where the extension arms are telescopic in longitudinal extensions. An adjusting cylinder for adjusting angle position between the arm parts is provided near to joints between the arm parts.

Document WO 2010/072877 discloses a device for cleaning solar modules of both the photovoltaic and thermosolar type by means of the atomized spraying of a cleaning liquid onto the surface of the modules. The device is of the towed type, suitable for mounting on a tractor vehicle or the like, and is designed in the form of an articulated assembly which comprises a jointed parallelogram structure, able to rotate about a support structure fixed to the transporting vehicle, being joined at its opposite end to a telescopic arm which has hinged on its far end a variable-position spraying bar which incorporates a plurality of nozzles for spraying the cleaning liquid. The spraying bar includes mechanical sensors for positioning on the surface. The different movements are performed in a controlled manner by means of operation of hydraulic cylinders, and the hinged joint between the spraying bar and telescopic arm includes a means for adjusting the maximum inclination of the spraying bar.

The aim of present invention is to obviate the above-mentioned drawbacks and more besides, by disclosing an apparatus for cleaning active surfaces of solar panels arranged oblique with respect to the ground, according to claim 1.

The apparatus proposed comprises:
at least a cleaning head in which the surface cleaning means are mounted,
a support arm for supporting the cleaning head, of a type which can be borne by a transport vehicle which in use can be guided in an advancement direction which is parallel to the horizontal extension of the solar panel to be cleaned, the arm comprising a distal end to which the cleaning head is fixed and a proximal end rotatably mountable on the transport vehicle such that the support arm can rotate with respect to a first horizontal rotation axis, such that the cleaning head can be alternatingly raised or lowered, and
at least an actuator device connected to the support arm and able to activate the support arm with respect to the first horizontal rotation axis.

With the invention, the operative can bring the vehicle, which is for example a tractor and on which the apparatus has been mounted, up to in front of the solar panel to be cleaned, and arrange the cleaning head such that it can reach a given area of the active surface of the panel.

In the present example, the support arm can be mounted on a flank of the vehicle; it can be arranged parallel to the horizontal development of the panel such that the vehicle can be guide in the advancement direction to clean the various modules composing the panel which are flanked horizontally and parallel to the advancement direction of the vehicle.

As the invention comprises having the cleaning head fixed to the distal end of the support arm, which varies the inclination with respect to the ground by activation of the actuator device, the user can regulate the height to which to bring the cleaning head, for example using a control console (of known type) connected to the actuator device and for example present in the cabin of the vehicle.

This enables bringing the cleaning head to the active surface of any module forming the panel in order that it can be cleaned quickly and without any effort. The inclination of the solar panel does not represent a problem because even the highest modules can be cleaned by bringing the support head above the panel such that the cleaning head works on the module in question while the lower modules are covered by the arm without being touched thereby.

As the apparatus of the invention is destined to be transported by vehicles, it is possible to clean many solar panels one after the other in a short time and without any great effort on the part of the personnel, the number of whom can advantageously be reduced to even one person, i.e. to the actual vehicle driver.

As the invention can perfectly clean the active surface of all the modules of the solar panel, even those most internal and highest, independently of the inclination and given that it can be done without the need for the operatives to rest on the panel and without their having to expend any great effort or run any risks, the invention obviates all the drawbacks of the prior art.

Specific embodiments of the invention will be detailed in the following, as well as advantageous technical-functional characteristics correlated to the embodiments which are only in part derivable from the above description, according to what is set out in the claims and with the aid of the accompanying tables of drawings, in which:
- figure 1 is a schematic view of the apparatus of the invention mounted on the transport vehicle and brought up close to the solar panel to be cleaned;
- figure 2 is detail K of figure 1;
- figure 3 is a lateral view of a part of the apparatus of the invention;
- figure 4 is a front view of figure 3;
- figures from 5 to 7 are lateral views of a part of the apparatus at various steps of operation; and
- figures 7 and 8 are axonometric views of a part of the apparatus according to two different points of view.

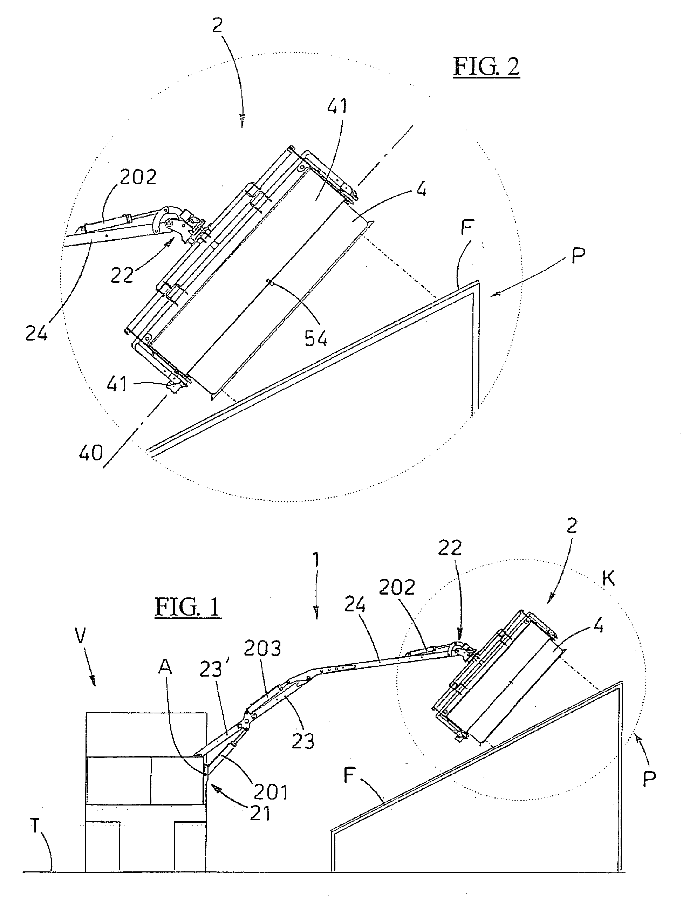

In the attached figures, reference numeral 1 denotes the proposed apparatus, 2 the cleaner head, and V the vehicle on which the apparatus 1 is mounted. As can be seen in figure 1, the support arm is preferably of the articulated type and comprises a plurality of linear sections 23, 23', 24 between the proximal end 21 and the distal end 22, the linear sections 23, 23', 24 being mutually articulated in pairs, at respective ends, by means of rotary couplings.

In the illustrated case, the sections are two in number, one formed by two subsections denoted by 23 and 23' and the other denoted by 24.

The above-mentioned actuator device connected to the support arm 23, 23', 25 may comprise a cylinder 201 suitably hinged to the support arm and to the vehicle V for rotating the arm itself 23, 23', 25 with respect to the first horizontal axis A , as is clear from figure 1.

Further, a jack 203 can be provided for each said rotary coupling between the linear sections 23, 23', 24, (in the represented case only one) to be able to actuate in reciprocal rotation the linear sections 23, 23', 24 of the articulated support arm.

The above-mentioned jacks and also those described below are preferably of the hydraulic type, and are thus operated by a hydraulic distributor which may be part of the apparatus 1 or can already be present on the vehicle V on which the apparatus 1 is destined to be mounted.

Figure 1 illustrates the way in which the vehicle V, the apparatus 1 and the panel P are arranged when the operator is about to start the cleaning of the active surface F of the panel P, which is clearly inclined with respect to the ground T.

In practice, as already explained, the vehicle V can advantageously be brought in front of the panel P and arranged substantially parallel therewith, such as to clean the active surface F (which in practice is the totality of the active surfaces of the modules that make up the panel) in the way already described herein above.

Although in figure 1 the type of panel P shown is the sort usually adopted in fields not put to use for agricultural purposes, the present apparatus 1 can function perfectly with the other types of solar panels.

Before passing on to an explanation of the operation of the apparatus 1 and the advantageous aspects of the invention, it is well to immediately specify, for clarity of explanation, possible components of the surface cleaning means that can be used in the disclosed apparatus, either separately or, preferably, together.

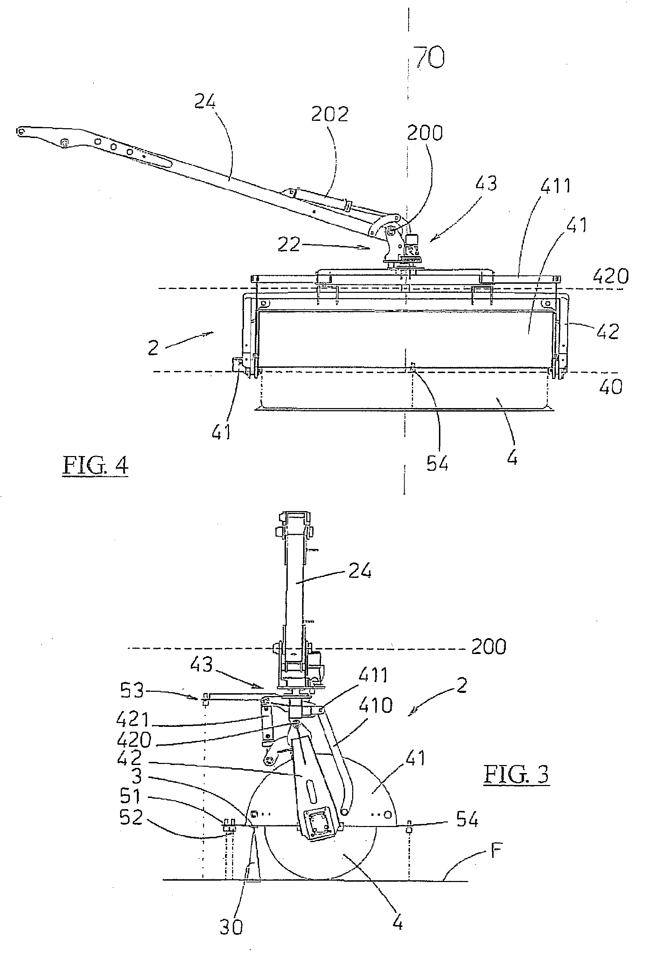

Firstly, the surface cleaning means can include a plurality of dispensing nozzles 3 for dispensing a cleaning fluid 30 (see for example figure 3), such as water or liquid detergents. The nozzles 3 are mounted in the cleaning head 2 so that in use they can deliver the cleaning fluid 30 directly onto the active surface F (as further detailed below).

In this case, the apparatus 1 further includes a reservoir for the fluid 30 and a pump for dispensing the fluid 30 at the desired pressure, or other devices for storing and pumping the fluid 30 (not shown because as of widely known type).

In addition, the surface cleaning means may also include a cleaning rotor 4, rotatable about an axis of central rotation 40, and also a rotation motor 41 (of any known type as long as suitable for the purpose) for powering the cleaning rotor 4 in rotation. The rotor 40 must have a suitable lateral edge for cleaning surfaces F of active solar panels P by scrubbing.

For example, the rotor 4 can be a rotary brush of the type usable in automated plants for car-washes, which being already widespread on the market, involves low costs.

In any case, and it will become apparent that this is also relevant for the functioning of the apparatus 1, the lateral periphery of the rotor 4 is preferably deformable following its positioning in abutment with the active surface F to be cleaned (this is not illustrated in the attached figures, for convenience).

This means that it is absolutely certain that the rubbing action of the rotor 4 does not become in any way dangerous for the integrity and operativity of the active surface F which, as mentioned, often includes a glass coating - a material having a limited hardness. Even more in detail, the cleaning rotor 4 preferably has the following configuration: first, it is of substantially cylindrical shape, comprises a cylindrical internal and central nucleus (which will have a certain stiffness and is for example made of plastic) to which the ends of a plurality of flexible elements (and for example elongate) are fixed, which protrude radially outward and are arranged such as to form, overall, a cylindrical rubbing crown concentric with the internal nucleus.

These flexible elements, or bristles, may be thread-like and can be made of polyethylene, or can be strips or have an irregular shape and for example be made of felt, etc. In concrete terms, the operator brings the vehicle V to near the solar panel P places in front of it and suitably starts to operate the support arm, by actuating the various jacks, and those which will be described herein below, so that the cleaning head 2 is located at the inclined active surface F at the point where the operative wants to start the cleaning operation. The cylinder head 2 will be positioned so that its rotor 4 is in contact with the active surface F of one of the panels, i.e. in practice in such a way that the rotor is arranged parallel to the surface F, with the rotation axis 40 which is inclined to the surface F and perpendicular to the advancement direction of the vehicle V (clearly so as to maximise the cleaning front), or at least is oblique.

The nozzles 3 are arranged preferably in front of the rotor 4 with respect to the advancement direction.

The operator, from the cabin, controls the activation of the jet of liquid 40 onto the panel, which acts chemically on the dirt, and possibly also mechanically if the pressure of the liquid 40 dispensed is sufficiently high.

He then actuates the rotation of the rotor 4, and begins to advance the vehicle V so that the rotor 4 rubs off the dirt already affected by the liquid, thus perfectly cleaning the active surface F of the various modules as the vehicle V is advanced.

When one or more horizontal rows of solar panels has been cleaned, if the panel is so large that one of its areas still remains to be cleaned, then the vehicle is repositioned to operate again on the panel P, this time with the cylinder head 2 placed at a different height, and so on.

The advantages that the apparatus 1 according to the invention offers in comparison with prior art are clear at this point.

In essence, the invention provides a semi-automatic cleaning system that uses a rotor 4 driven by a motor 41 to forcibly remove the dirt pre-treated by the liquid 30, without damaging the active surface F of the cleaned solar panels P.

As a result, the cleaning efficiency obtainable with the proposed apparatus 1 is at a level of effectiveness that is not comparable to the manual cleaning of the prior art.

The rotor 4 is preferably semi-covered by a casing 41, rigidly associated to the rotor 4, the rotor 4 being rotatable with respect to the casing 41 itself, which casing 41 is for example semi-cylindrical as in the attached figures, or bell-shaped, and is provided with an opening from which the rotor 4 protrudes to a considerable extent, preferably by a half, instant by instant, so that it can be placed in contact with, and to a certain extent pressed against the surface to be cleaned F.

In this case, the nozzles 3 are directly mounted on the casing 4.

The invention can provide the advantageous specifications for preventing the rotor 4 from being at a wrong distance from the active surface F during cleaning of the panel P, either because the latter has modules that are not perfectly parallel to one another, or due to unevenness caused by unevenness of the ground on which it rests, or due to the presence of obstacles which the vehicle V must avoid.

In fact, if the rotor is too closely neared, there is the risk that the rigid nucleus, given the yielding nature of the cylindrical crown of flexible elements, will impact against the panel, or the impact can involve other parts of the head 2 and the panel P.

Conversely, if the rotor 4 detaches from the surface F during the cleaning, the cleaning operation is compromised.

To prevent this, the invention comprises advantageous aspects, which are described in the following with the aid especially of figures 3, 5, 6 and 7.

Firstly, the rotor 4 is mounted oscillatingly in the cleaning head 2, and is destined to oscillate between a retracted position R and an extended position E in which given a same distance between the central rotation axis (40) of the rotor (4) from the active surface (F) to be cleaned, the distal end (22) of the support arm is respectively closer and more distant with respect to the surface (F).

Concretely, this is realised by means of a C-shaped bracket 42 to which the rotor 4 is rotatably coupled, which bracket 42 is a part of the head 2 and in practice supports the rotor 4 (and possibly also the motor 41 thereof).

In detail, the bracket 42 is connected to the support structure of the rotor 4 which rotatably houses the central rotation axis thereof (in which the ideal rotation axis 40 passes), and projects with respect to the longitudinal development thereof.

The C-bracket is hinged at the parallel crossbar thereof to the rotor 4 (which connects the elements that terminate with the above-cited ends) to a connecting member 43 (also part of the head 2 and more fully described herein below) such as to rotate with respect to the axis denoted by 420 in the accompanying figures, which axis 420 is parallel to the axis 40 of the rotor.

Thus, with this configuration, the rotor 4 is closer to the distal end 22 of the rotor when it is in the retracted position R and is further in the extended position E.

To activate and regulate the oscillation of the rotor 4 in the head 3, an actuator device is included, comprising a rotor jack 421 appropriately connected both to the bracket 42 and to the connecting member 43 in known ways to a person expert in the field of mechanics.

The possibility of oscillation of the rotor 4 is included for regulating the distance thereof with the panel P, which regulation is commanded by using a rotor distance sensor 51, 52 (for example an ultrasound sensor of known type; in the following an explanation will be given as to why two are illustrated) mounted in the cleaning head 2 (preferably on the casing 41, as will be more fully explained herein below) in such a way that in use it can perform measurements relative to the distance between the central rotation axis 40 of the rotor 4 and the active surface F of the solar panel P which is being cleaned.

Therefore the rotor distance sensor 51, 52 is arranged such as to be pointed in a perpendicular direction to the rotor rotation axis 40.

In practice, as the circumference of the rotor 4 is known, when the periphery thereof is not deformed, the circumference of the internal nucleus of the rotor 4 and the dimensions of the casing 41 and the bracket 42, the threshold values can be calculated beyond which the rotor 4 is considered to be pressed too hard against the surface to be cleaned F, or considered to be too distant therefrom.

In reality, is it equivalent if instead of the rotation axis 40 of the rotor 4, the calculations are performed taking as an example the surface of a cylinder coaxial to the rotor 4 (such as its rigid nucleus or an ideal cylinder), and consequently what was mentioned above with respect to the distances calculated according to the rotation axis 40 is to be considered and indicative but not limiting with regard to the function carried out by the sensors and the actuators of the invention.

It is clear that the providing of sensors implicates the use of a processing unit (of known type and for example locatable in the driving cabin of the vehicle V) in order to process the signals from the sensor, and to automatically command a slave device which in the invention disclosed is the above-mentioned rotor jack 421.

The rotor sensor 51, 52 is located in front of the rotor 4 with respect to the advancement direction of the vehicle V, i.e. the sensor 51, 52 has to precede the rotor 4 when the rotor 4 moves along the panel P moved by the advancing of the vehicle V; this can be obtained by mounted it on a projecting element fixed to an edge of the opening of the casing 41, for example.

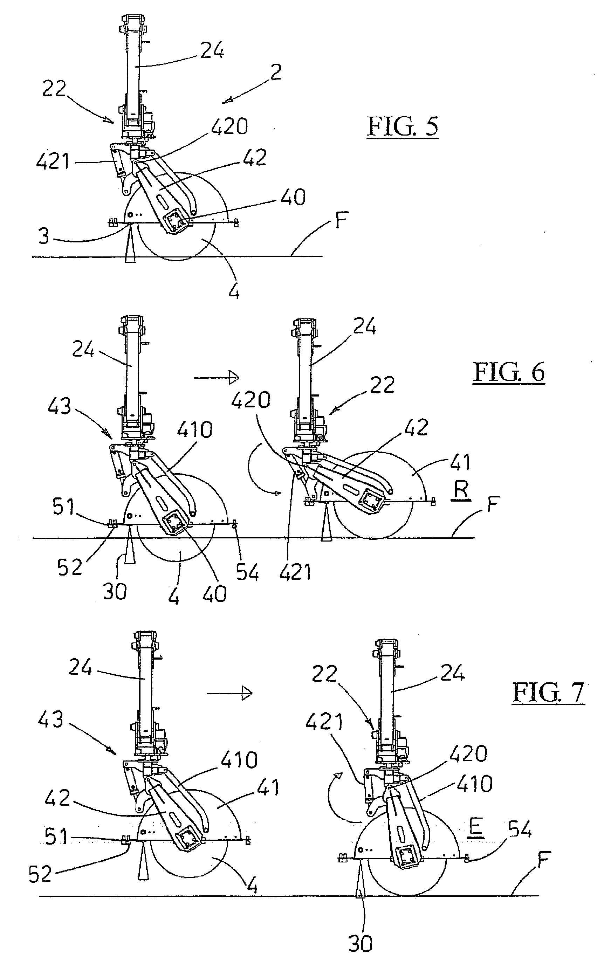

The functioning of these specified details is now explained, with the aid of figures 5-7.

Figure 5 illustrates a condition of correct use of the apparatus 1, with the distance between the central axis 40 of the rotor and active surface F being optimal.

When the distance reduces by too much, as shown in the left side of figure 6, thanks to the detection of the rotor distance sensor 51, 52 and the calculation of the processing unit, the rotor jack 421 is automatically commanded to extend, pushing the bracket 42 such that the rotor 4 displaces towards the retracted position R, up until the sensor 51, 52 detects a distance which is at least the minimum acceptable (or predefined as optimal), at which the jack 421 blocks (as shown in the right part of figure 6 which illustrates the case in which the rotor has reached the retracted position R).

Conversely, in a case where the rotation axis 40 of the rotor is too far from the surface F to be cleaned (left side of the figure 7 according to the calculations of the processing unit, based on the signals of the sensor 51, 52, the rotor jack 421 is shortened (the stem enters more into the cylinder) and the rotor 4 therefore oscillates towards the extended position E, and nears the surface up until it has returned to the right distance (i.e. at least in contact), as represented in the right part of figure 7, in which the rotor is by way of example in the extreme extended position E.

In this way, the above-mentioned risk of damaging or not cleaning the active surface F are prevented with even having to interrupt the cleaning operations and especially automatically and therefore independently of the operator's abilities.

To prevent, during the compensating operations of the excessive displacements of the distance between the central axis 40 and the surface to be cleaned, the casing 41 from also inclining, which would risk an impact against the surface F, the casing 41 is hinged to the opposite ends of the longitudinal development thereof (the semi-bases in the case of a semi-cylindrical shape) to rigid connecting elements 410 which are in turn hinged to a connecting crossbar 411 fixed to the connecting member 43.

The rotor jack 421 is necessarily activatable between a minimum endrun in which the longitudinal development is minimal (corresponding to the maximum retraction of the stem in the cylinder) and a maximum endrun in which the longitudinal development is maximal (maximum extension from the stem of the cylinder).

It follows that the above-mentioned self-regulation of the distance between the central axis 40 of the rotor and the surface F to be cleaned is limited to the minimum- and maximum-extension endrun of the rotor jack 421.

To account for cases, probably infrequent, in which the distance between the rotor axis 40 and the active surface F is so significant that the regulating by means of the rotor jack 421 is no longer sufficient, various jacks 201, 203 will be used, which jacks 201, 203 are provided for the articulating of the support arm 23, 23', 24, also for moving the entire head 2 either towards the active surface F to be cleaned or away from it, such as to proceed with compensating beyond the limits imposed by the endruns of the rotor jack 421.

In this case, the hinge jacks 23, 23', 24 will also be enslaved to the processing unit, which can receive the signals to be processed in two different ways.

In a first version, two position sensors (of known type and not illustrated) are connected to the rotor jack 421 to respectively detect when the jack 421 is in the minimum-extension endrun and when it is in the maximum-extension endrun.

When it is detected that the jack 421 is in one of the mentioned endrun positions, the processing unit commands the various articulation jacks 201, 203 of the arm 23, 23', 24 such as either to further distance or more greatly near the rotor 4 (i.e. the ideal rotation axis 40) to the surface to be cleaned, such as to return it into the group of acceptable distances and eventually to the optimal distance.

The same function can be performed using a head distance sensor 53, illustrated in figure 3, mounted for example on the connecting member 43 (or in any case in a remaining part of the head 2 with respect to the rotor 4) such that it remains still in the head 2 independently of the oscillation of the rotor 4, but is directed such as to detect the distance in a perpendicular direction to the axis 40 of the rotor 4.

In this case, the processing unit will calculate the moment at which to activate the articulation jacks 201, 203 on the basis of the positioning of the head sensor 53 and the maximum and minimum extension of the rotor jack 421 and obviously on the basis of the detected distance instant by instant from the head sensor 53.

The reason why, as mentioned, the rotor sensors 51, 52 are preferably two or more in number and are arranged at different distances from the rotor 4 is connected with the fact that the various modules arranged in succession in the horizontal rows of the solar panels are mounted slightly apart, like tiles in a flooring which exhibit a space line between them.

The invention is able to prevent a detection of the separating space between the modules of a row by a rotor sensor from being interpreted by the processing unit as an excessive distance of the rotation axis 40 from the active surface F, with a consequent undesired actuation of the jacks 421, 201, 203 each time the cleaning head 2 passes between two modules.

In order to be sure that this does not occur, two rotor sensors 51, 52 have been included rather than just one.

In this way, when the processing unit notes a discord between the detections made by the two sensors 51, 52, which cannot occur if the rotor 4 is pressed too hard on the active surface 51, 52 or distanced too far therefrom the processing unit will interpret this as an indication that the sensors 51, 52 are passing above the separating zone between two modules.

Further, it can happen, especially in a case of irregularity in the ground on which the panels are resting, that the panels do not really exhibit, over their whole extension, the inclination which was intended for receiving the greatest quantity of solar radiations possible, but exhibit undesired variations in the inclination along, for example, the horizontal development thereof.

To prevent this causing only a transversal sector of the rotor 4 to work on the active surface F while the other section is raised and therefore unused, or to prevent a section from pressing too hard on the active surface F with a consequent risk of damage, the apparatus 1 comprises special specifications, clearly illustrated in figures 4, 8 and 9, the functioning of which will be explained with the help of figures 1 and 2.

In a particular aspect of the invention, the cleaning head 2 is fixed to the distal end 22 of the support arm by means of a rotary coupling arranged in such a way as to enable the head 2 to oscillate with respect to a head oscillation axis 200 that is perpendicular to the rotation axis 40 of the rotor 4.

From the constructional point of view, the connecting member 43, which substantially supports the rotor 4 and the casing 41 by means of the bracket 42 and the elements denoted by 410 is hinged to the distal end 22 of the support arm.

The apparatus 1 further comprises a head actuator device which is connected to the cleaning head 2 in order to actuate and regulate the oscillation thereof, which in practice can comprise the head jack 202 located between the support arm (the segment thereof denoted by 24) and the connecting member 43 (in ways known to an expert in the field of mechanics and not detailed herein).

Firstly, the head jack 202 can be commandable by the operative in the driving cabin of the vehicle V, in order to fine-adjust the position of the cleaning head 2 with respect to the panel P.

If the head jack 202 is to be enslaved to the electronic processing unit, it can be used to compensate the above-cited undesired variations in the inclination of the panel P.

In an advantageous specification of the invention, two distance sensors are comprised, preferably the same sensors already described and denoted with 51 and 52, which are specially arranged by a flank of the cleaning rotor 4 at various points of the longitudinal development thereof.

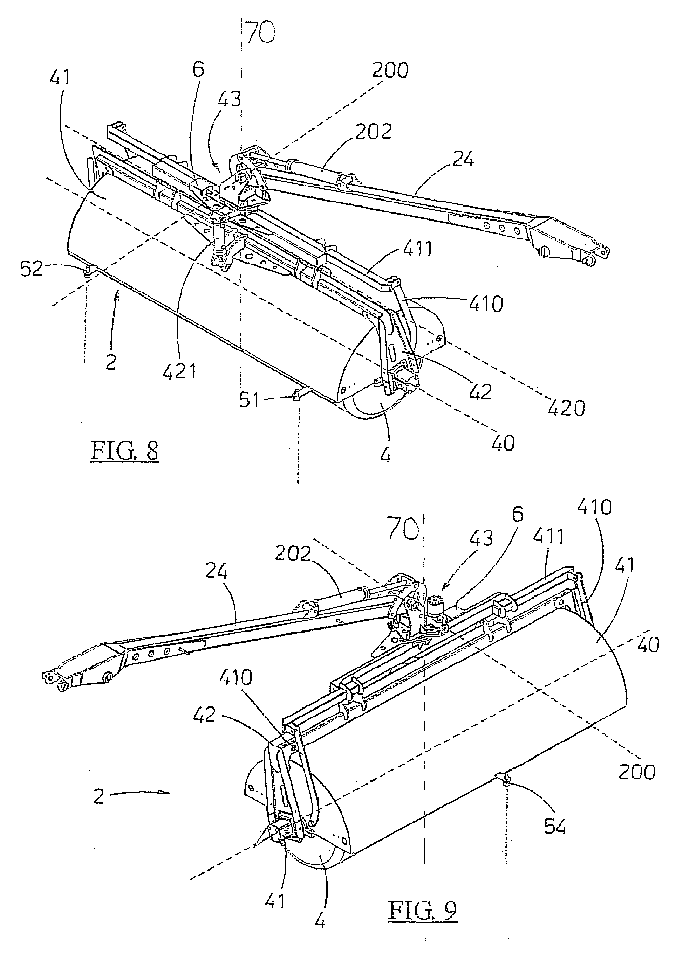

In practice, as is clear from figure 8, the head sensors 51, 52 can be fixed externally of the casing 41, at the edge of the opening, spaced from one another, in different positions along the length thereof, and preferably in proximity of the ends of the longitudinal development thereof.

It follows that, as is clear from figures 1 and 2, if the rotor is not parallel to the active surface F, the sensors 51, 52 detect different distances and this is naturally communicated in the form of signals to the processing unit.

The processing unit will then automatically command the head jack 202 to rotate the whole head 2 with respect to the oscillation axis denoted by 200, until the detected distance values by the sensors 51, 52 do not coincide.

In this way, the invention perfectly compensates the variations in inclination as described above.

The compensation can be done using, in the place of the head sensors 51, 52 (or at most additionally thereto), an adjustable electric spirit level 6 or in any case a device for measuring an inclination, of a type which measures the inclination with respect to a reference angle between the horizon and the direction of gravity which is variable by action of a user.

The electronic inclination measuring devices are in themselves known.

Usually they function according to the pendulum principle comprising an element that is oscillatable in an oil reservoir, or the like, a position transducer (for example inductive) and a potentiometer which enables the operator to calibrate the reference angle with respect to which he can calculate the inclination.

Mounting the electronic inclination measuring device 6 such as to measure the inclination of the rotation axis 40 of the cleaning rotor 4, for example on the connecting member 43 (as in the figures) on a crossbar or parallel to the axis 40, the electronic unit can use the measurement of inclination determined by the device 6 for commanding the head jack 202 and performing the compensating operation.

Further, the invention can comprise a further distance sensor 54 located in an opposite position to the head sensors 51, 52 already mentioned with respect to the rotor 4, and flanked to the rotor 4 itself, preferably in a median position with respect to the longitudinal direction.

The sensor 54 can be used for gaining supplementary information useful for performing the two cited compensations, i.e. those of the distance between the axis 40 of the rotor and the active surface to be cleaned F, or the irregular inclination of the panel 4, and can be for example useful in the particular case in which, during the cleaning, one of the cited sensors 51, 52 becomes positioned above the spaces that separate the modules of a horizontal row of the panel from those of another row horizontal thereto, above or below.

Finally, in a preferred aspect of the invention, the head 2 can rotate about a further rotation axis 70 which passes through the head itself, located preferably transversally with respect to the length of the head 2 and for example in a median position with respect to the length itself (see figures 4, 8 and 9).

In practice the further rotation axis 70 is in a fixed position with respect to the head (which is mobile with respect thereto) and is preferably selected in such a way that the head can rotate on itself even by 180° up to arriving at a specular arrangement to the starting positions.

Clearly the head can rotate, if desired, by angles of greater or less than 180°.

Before describing the constructional aspects of the specification, the functioning will be explained.

The whole active surface F can be cleaned in successive operations, i.e. by cleaning, in succession, horizontal strips defined longitudinally by the lateral ends of the active surface F.

To do this, the vehicle V is driven up to in front of the panel in a parallel direction to the horizontal development thereof, from a lateral end to another.

When the vehicle V is advanced sufficiently for the head 2 to have cleaned a whole strip, and it has reached the lateral end of the active surface F opposite the end it started from the head is turned over on itself (and rotated about the further rotation axis 70), is placed at an end of the further strip to be cleaned, and the vehicle is then activated in reverse such that the head 2 is passed along the further strip such as to clean it, and so on.

In this way it is not necessary that after each passage the driver has to manoeuvre the vehicle V to invert the direction, returning towards the initial lateral end of the panel P, newly inverting the direction and only then rearranging the head on the active surface F in order to perform a further passage.

This rotation about a further rotation axis 70 can be obtained by means of a fifth wheel (not illustrated) mounted on the mentioned connecting member 43, or between the connecting member and the C-bracket 42, or in a further connected element or an element comprised in the cleaning head, which fifth wheel is subject to actuation on the part of either an orbital motor or other actuating means (possibly also of the linear type, and for example hydraulic).

The foregoing has been described by way of non-limiting example, and any constructional variants are understood to fall within the scope of protection of the present technical solution, as claimed in the following.

## Claims

1. An apparatus for cleaning active surfaces (F) of solar panels (P) arranged obliquely with respect to the ground (T), the apparatus (1) comprising:
surface cleaning means (3, 4) able to clean a given surface area;
at least a cleaning head (2) in which the surface cleaning means (3, 4) are mounted;
a support arm (22, 23', 24) for supporting the cleaning head (2), of a type which can be borne by a transport vehicle (V) which in use can be guided in an advancement direction which is parallel to the horizontal extension of the solar panel (P) to be cleaned, the arm (23, 23', 24) comprising a distal end (22) to which the cleaning head (2) is fixed and a proximal end (21) rotatably mountable on the transport vehicle (V) such that the support arm can rotate with respect to a first horizontal rotation axis (A), such that the cleaning head (2) can be alternatingly raised or lowered;
at least an actuator device (201) connected to the support arm (23, 23', 24) and able to activate the support arm (23, 23', 24) with respect to the first horizontal rotation axis (A);
wherein the surface cleaning means comprise at least a cleaning rotor (4), rotatable about a central rotation axis (40) thereof, and a rotation motor (41) for activating the cleaning rotor (4) in rotation, the lateral periphery of the rotor being suitable for cleaning by wiping the active surfaces (F) of solar panels;
wherein the lateral periphery of the rotor (4) is deformable upon positioning thereof in abutment with the active surface (F) to be cleaned;
wherein the cleaning rotor (4) has a shape substantially cylindrical, and is destined to be used arranged with the central axis (40) parallel to the active surface (F) to be cleaned and perpendicular or oblique to the advancement direction, which rotor (4) comprises a cylindrical and central internal nucleus to which ends of a plurality of flexible elements are fixed, which project radially externally and are arranged such as to form together a cylindrical wiping crown concentric to the internal nucleus;
wherein the cleaning head (2) is fixed to the distal end (22) of the support arm by means of a rotatable coupling arranged in such a way as to enable the head (2) itself to oscillate with respect to an oscillation axis (200) perpendicular to the rotation axis (40) of the rotor (4), the apparatus (1) comprising a head actuator device (202) connected to the cleaning head (2) such as to activate and regulate oscillation thereof;
the apparatus being **characterized in that**:
the rotor (4) is mounted oscillatably in the cleaning head (2) and is able to oscillate between two use positions which are a retracted position (R) and an extended position (E) in which, given a same distance between the central rotation axis (40) of the rotor (4) from the active surface (F) to be cleaned, the distal end (22) of the support arm (23,23',24) is respectively closer and more distant with respect to the surface (F), the cleaning head (2) comprising a rotor actuator device (421) connected to the rotor (4) and destined to activate and regulate the oscillation of the rotor (4) in the head (2);
the cleaning head (2) comprises two rotor distance sensors (51, 52) arranged by a flank of the cleaning rotor (4) at different points of the longitudinal development thereof, each rotor distance sensor (51, 52) being mounted in such a way that in use it can perform measurements relative to the distance between the central rotation axis (40) of the rotor (4) and the active surface (F) of the solar panel (P) which is being cleaned;
the possibility of oscillation of the rotor (4) being included for regulating the distance thereof with the panel (P), which regulation is commanded by using the two rotor distance sensors (51, 52).

2. The apparatus of the preceding claim, wherein the surface cleaning means comprise at least a dispenser nozzle (3) for dispensing a cleaning fluid (30), mounted in the cleaning head (2) such that in use it can dispense the cleaning fluid (30) directly onto the active surface (F) of the solar panel (P) which is being cleaned; the apparatus (1) further comprising at least a device for containing and pumping cleaning fluids connected to the nozzle (3).

3. The apparatus of claim 1, wherein the rotor (4) is constituted by a rotary brush of a type usable in automatic vehicle washing plants.

4. The apparatus of claim 1, wherein the rotor actuator device comprises a rotor jack (421) activatable between an minimum-extension endrun in which a longitudinal development is minimal and a maximum-extension endrun in which the longitudinal development is maximal, the rotor actuator device further comprising two position sensors connected to the jack (421) such as to detect respectively when the jack (421) is in the minimum-extension end run and when it is in the maximum-extension run.

5. The apparatus of claim 1, wherein the cleaning head (2) comprises a head distance sensor (53) mounted in a remaining part of the head (2) with respect to the rotor (4) whereby it remains stationary in the head (2) independently of the oscillation of the rotor (4).

6. The apparatus of claim 1, wherein the two rotor distance sensors (51, 52) are arranged at different distances from the rotor (4), and are both located in front of the rotor (4) with respect to the advancement direction of the vehicle (V).

7. The apparatus of claim 1, wherein the cleaning head (2) comprises a device (6) for measuring an inclination with respect to a reference angle between the horizon and the direction of gravity which angle is variable by a user, the device (6) being mounted in the cleaning head (2) such as to measure an inclination of the rotation axis (40) of the cleaning rotor (4).

## Patentansprüche

1. Vorrichtung (1) zum Reinigen aktiver Oberflächen (F) von Solarmodulen (P), die relativ zum Gelände (T) schräg angeordnet sind, welche Folgendes beinhaltet:
Mittel zur Oberflächenreinigung (3, 4), die geeignet sind, einen gegebenen Oberflächenbereich zu reinigen;
zumindest einen Reinigungskopf (2), in den die Mittel zur Oberflächenreinigung (3, 4) eingebaut sind;
einen Trägerarm (23, 23', 24) zum Tragen des Reinigungskopfs (2) von der Art, die von einem Transportfahrzeug (V) getragen werden kann, das im Gebrauch in einer Vorschubrichtung verfahren werden kann, die parallel zu der horizontalen Ausdehnung des zu reinigenden Solarmoduls (P) ist, wobei der Arm (23, 23', 24) ein distales Ende (22) beinhaltet, an dem der Reinigungskopf (2) festgelegt ist, und ein proximales Ende (21) beinhaltet, das drehbar an dem Transportfahrzeug (V) angebaut werden kann, so dass der Trägerarm um eine erste horizontale Drehachse (A) drehen kann, so dass der Reinigungskopf (2) wechselweise angehoben oder abgesenkt werden kann;
zumindest eine Stellantriebsvorrichtung (201), die mit dem Trägerarm (23, 23', 24) verbunden und in der Lage ist, die Bewegung des Trägerarms (23, 23', 24) relativ zu der ersten horizontalen Drehachse (A) zu aktivieren;
worin die Mittel zur Oberflächenreinigung zumindest einen Reinigungsrotor (4) beinhalten, der um eine mittlere Drehachse (40) des Rotors drehbar ist, und einen Rotationsmotor (41), der dazu dient, den Reinigungsrotor (4) in eine Drehbewegung zu versetzen, wobei der seitliche Umfang des Rotors geeignet ist, die Reinigung durch Abwischen der aktiven Oberflächen (F) der Solarmodule auszuführen;
worin der seitliche Umfang des Rotors (4) infolge seines Aufsetzens auf die zu reinigende aktive Oberfläche (F) verformbar ist;
worin der Reinigungsrotor (4) eine im Wesentlichen zylindrische Form aufweist und dazu bestimmt ist, mit seiner Mittelachse (40) parallel zu der zu reinigenden aktiven Oberfläche (F) und perpendikular oder schräg zur Vorschubrichtung angeordnet zu werden, wobei dieser Rotor (4) einen zylindrischen und mittleren Innenkern aufweist, an welchem Enden mehrerer flexibler Elemente festgelegt sind, die radial nach außen davon hervorragen und derart angeordnet sind, dass sie in ihrer Gesamtheit einen zum Innenkern konzentrischen zylindrischen Wischerkranz bilden;
worin der Reinigungskopf (2) an dem distalen Ende (22) des Trägerarms mittels einer drehbaren Kupplung festgelegt ist, die derart angeordnet ist,
dass sie eine Schwingbewegung des Kopfes (2) um eine Schwingungsachse (200) ermöglicht, die perpendikular zur Drehachse (40) des Rotors (4) ist, wobei die Vorrichtung (1) eine Kopf-Stellantriebsvorrichtung (202) beinhaltet, die mit dem Reinigungskopf (2) verbunden ist, um dessen Schwingbewegung zu aktivieren und zu regulieren;
wobei die Vorrichtung **dadurch gekennzeichnet ist, dass**:
der Rotor (4) schwingbar im Reinigungskopf (2) eingebaut ist und eine Schwingbewegung zwischen zwei Gebrauchsstellungen ausführen kann, genauer gesagt einer Rückzugsstellung (R) und einer Auszugsstellung (E) in denen sich jeweils, bei gleichem Abstand zwischen der mittleren Drehachse (40) des Rotors (4) von der zu reinigenden aktiven Oberfläche (F), das distale Ende (22) des Trägerarms (23, 23', 24) näher an beziehungsweise weiter entfernt von der Oberfläche (F) befindet, wobei der Reinigungskopf (2) eine Rotor-Stellantriebsvorrichtung (421) beinhaltet, die mit dem Rotor (4) verbunden ist, um die Schwingbewegung des Rotors (4) im Kopf (2) zu aktivieren und zu regulieren;
der Reinigungskopf (2) zumindest zwei Rotor-Abstandssensoren (51, 52) beinhaltet, die an einer Seite des Reinigungsrotors (4) an verschiedenen Punkten entlang dessen Längsausdehnung angeordnet sind, wobei jeder Rotor-Abstandssensor (51, 52) derart angebracht ist, dass er im Gebrauch Messungen in Bezug auf den Abstand zwischen der mittleren Drehachse (40) des Rotors (4) und der zu reinigenden aktiven Oberfläche (F) des Solarmoduls (P) ausführen kann;
die Möglichkeit der Ausführung einer Schwingbewegung des Rotors (4) gegeben ist, um dessen Abstand zu dem Modul (P) zu regulieren, wobei diese Regulierung unter Verwendung der zwei Rotor-Abstandssensoren (51, 52) angesteuert wird.

2. Vorrichtung nach dem vorhergehenden Anspruch, worin die Mittel zur Oberflächenreinigung zumindest eine Ausgabedüse (3) zum Abgeben einer Reinigungsflüssigkeit (30) beinhaltet, die so im Reinigungskopf (2) eingebaut ist, dass sie die Reinigungsflüssigkeit (30) direkt auf die zu reinigende aktive Oberfläche (F) des Solarmoduls (P) ausgeben kann; wobei die Vorrichtung (1) ferner zumindest eine mit der Düse (3) verbundene Vorrichtung zum Bevorraten und Pumpen von Reinigungsflüssigkeiten beinhaltet.

3. Vorrichtung nach Anspruch 1, worin der Rotor (4) aus einer Rundbürste der Art besteht, wie sie in automatischen Autowaschanlagen verwendet werden kann.

4. Vorrichtung nach Anspruch 1, worin die Rotor-Stellantriebsvorrichtung einen Rotorheber (421) beinhaltet, der aktivierbar ist zwischen einer Endlage des minimalen Ausziehzustandes, in der seine Längsausdehnung minimal ist, und einer Endlage des maximalen Ausziehzustandes, in der seine Längsausdehnung maximal ist, wobei die Rotor-Stellantriebsvorrichtung ferner zwei Lagesensoren beinhaltet, die mit dem Heber (421) derart verbunden sind, dass sie jeweils erfassen, wenn sich der Heber (421) in der Endlage des minimalen Ausziehzustandes beziehungsweise in der Endlage des maximalen Ausziehzustandes befindet.

5. Vorrichtung nach Anspruch 1, worin der Reinigungskopf (2) einen Kopf-Abstandssensor (53) beinhaltet, der in einem nicht vom Rotor (4) belegten verbleibenden Teil des Kopfes (2) eingebaut ist, so dass er unabhängig von der Schwingbewegung des Rotors (4) stationär im Kopf (2) verbleibt.

6. Vorrichtung nach Anspruch 1, worin die zwei Rotor-Abstandssensoren (51, 52) in unterschiedlichen Abständen vom Rotor (4) angeordnet sind und sich beide, bezogen auf die Vorschubrichtung des Fahrzeugs (V), vor dem Rotor (4) befinden.

7. Vorrichtung nach Anspruch 1, worin der Reinigungskopf (2) eine Vorrichtung (6) zur Messung einer Neigung im Verhältnis zu einem Bezugswinkel zwischen dem Horizont und der Schwerkraftrichtung beinhaltet, wobei dieser Winkel von einem Benutzer variiert werden kann, wobei die Vorrichtung (6) im Reinigungskopf (2) eingebaut ist, um eine Neigung der Drehachse (40) des Reinigungsrotors (4) zu messen.

## Revendications

1. Un appareil pour le nettoyage de surfaces actives (F) de panneaux solaires (P) disposés obliquement par rapport au sol (T), l'appareil (1) comprenant :
des moyens de nettoyage de surfaces (3, 4) destinés à nettoyer une zone de surface donnée ;
au moins une tête de nettoyage (2) dans laquelle les moyens de nettoyage de surfaces (3, 4) sont montés ;
un bras de support (23, 23', 24) pour supporter la tête de nettoyage (2), d'un type qui peut être porté par un véhicule de transport (V) qui, durant l'utilisation, peut être guidé dans une direction d'avance qui est parallèle à l'extension horizontale du panneau solaire (P) à nettoyer, le bras (23, 23', 24) comprenant une extrémité distale (22) à laquelle la tête de nettoyage (2) est fixée et une extrémité proximale (21) pouvant être montée de façon rotative sur le véhicule de transport (V) de manière à ce que le bras de support puisse tourner par rapport à un premier axe de rotation horizontal (A), afin que la tête de nettoyage (2) puisse être alternativement levée ou abaissée;
au moins un dispositif actionneur (201) relié au bras de support (23, 23', 24) et destiné à activer ledit bras de support (23, 23', 24) par rapport au premier axe de rotation horizontal (A);
dans lequel les moyens de nettoyage de surfaces comprennent au moins un rotor de nettoyage (4) pouvant tourner autour d'un axe central de rotation (40) respectif, et un moteur de rotation (41) pour actionner en rotation le rotor de nettoyage (4), la périphérie latérale du rotor étant adaptée pour nettoyer par essuyage les surfaces actives (F) de panneaux solaires ;
dans lequel la périphérie latérale du rotor (4) est déformable suite au positionnement de celle-ci en butée avec la surface active (F) à nettoyer ;
dans lequel le rotor de nettoyage (4) a une forme essentiellement cylindrique, et est destiné à être utilisé disposé avec l'axe central (40) parallèle à la surface active (F) à nettoyer et perpendiculaire ou oblique à la direction d'avance, ledit rotor (4) comprend un noyau intérieur cylindrique et central auquel sont fixées des extrémités d'une pluralité d'éléments flexibles, qui se projettent radialement vers l'extérieur et sont disposés de manière à former ensemble une couronne d'essuyage cylindrique concentrique audit noyau intérieur ;
dans lequel la tête de nettoyage (2) est fixée à l'extrémité distale (22) du bras de support au moyen d'un accouplement rotatif disposé de manière à permettre à la tête (2) elle-même d'osciller par rapport à un axe d'oscillation (200) perpendiculaire à l'axe de rotation (40) du rotor (4), l'appareil (1) comprenant un dispositif actionneur de tête (202) relié à la tête de nettoyage (2) de manière à activer et à régler l'oscillation de celle-ci ;
l'appareil étant **caractérisé en ce que** :
le rotor (4) est monté de façon oscillante dans la tête de nettoyage (2) et est destiné à osciller entre deux positions d'utilisation qui sont une position rentrée (R) et une position étendue (E) dans lesquelles, étant donné une même distance entre l'axe central de rotation (40) du rotor (4) par rapport à la surface active (F) à nettoyer, l'extrémité distale (22) du bras de support (23, 23', 24) est respectivement plus près et plus loin par rapport à ladite surface (F), la tête de nettoyage (2) comprenant un dispositif actionneur de rotor (421) relié au rotor (4) et destiné à activer et à régler l'oscillation dudit rotor (4) dans la tête (2) ;
la tête de nettoyage (2) comprend deux capteurs de distance de rotor (51, 52) disposés sur un côté du rotor de nettoyage (4) en différents points du développement longitudinal de celui-ci, chaque capteur de distance de rotor (51, 52) étant monté de manière à ce qu'il puisse effectuer, durant l'utilisation, des mesures relatives à la distance entre l'axe central de rotation (40) du rotor (4) et la surface active (F) du panneau solaire (P) qui est en cours de nettoyage ;
la possibilité d'oscillation du rotor (4) étant incluse pour régler la distance de celui-ci avec le panneau (P), ledit réglage est commandé en utilisant les deux capteurs de distance de rotor (51, 52).

2. L'appareil selon la revendication précédente, dans lequel les moyens de nettoyage de surfaces comprennent au moins une buse de distribution (3) pour distribuer un fluide de nettoyage (30), montée dans la tête de nettoyage (2) de manière à ce que, durant l'utilisation, elle distribue le fluide de nettoyage (30) directement sur la surface active (F) du panneau solaire (P) qui est en cours de nettoyage ; l'appareil (1) comprenant en outre au moins un dispositif pour contenir et pomper des fluides de nettoyage, relié à la buse (3).

3. L'appareil selon la revendication 1, dans lequel le rotor (4) est constitué par une brosse rotative d'un type utilisable dans les installations automatiques de lavage de véhicules.

4. L'appareil selon la revendication 1, dans lequel le dispositif actionneur de rotor comprend un vérin de rotor (421) pouvant être activé entre une fin de course d'extension minimum dans laquelle un développement longitudinal est minimum et une fin de course d'extension maximum dans laquelle le développement longitudinal est maximum, le dispositif actionneur de rotor comprenant en outre deux capteurs de position reliés au vérin (421) de manière à détecter respectivement quand ce même vérin (421) est dans la fin de course d'extension minimum et quand il est dans la course d'extension maximum.

5. L'appareil selon la revendication 1, dans lequel la tête de nettoyage (2) comprend un capteur de distance de tête (53) monté dans une partie restante de la tête (2) par rapport au rotor (4) de manière à ce qu'il reste fixe dans la tête (2) indépendamment de l'oscillation du rotor (4).

6. L'appareil selon la revendication 1, dans lequel les deux capteurs de distance de rotor (51, 52) sont disposés à des distances différentes du rotor (4), et sont tous les deux situés en face du rotor (4) par rapport à la direction d'avance du véhicule (V).

7. L'appareil selon la revendication 1, dans lequel la tête de nettoyage (2) comprend un dispositif (6) pour mesurer une inclinaison par rapport à un angle de référence entre l'horizon et la direction de gravité, ledit angle pouvant être changé par un utilisateur, le dispositif (6) étant monté dans la tête de nettoyage (2) de manière à mesurer une inclinaison de l'axe de rotation (40) du rotor de nettoyage (4).
